# EUROPEAN PATENT APPLICATION

(11) **EP 4 467 517 A1**
(43) Date of publication of application: **27.11.2024**
(21) Application number: 23315214.9
(22) Date of filing: 24.05.2023
(51) Int. Cl.: C01B 17/69, C01B 17/76, C01B 3/06, C01B 17/50, C01B 17/54, C01B 17/74

(54) **PROCESS FOR PRODUCTION OF SULFURIC ACID FROM H2S**

(71) Applicant: TotalEnergies OneTech, 92400 Courbevoie (FR)
(72) Inventor: Veryasov, Gleb, B-7181 Seneffe (BE); Grishin, André, 75013 Paris (FR)
(74) Representative: Mellet, Valérie Martine

(57) **Abstract**

A process for the production of sulfuric acid from hydrogen sulfide comprising providing a gaseous feedstock (1) comprising hydrogen sulfide and reacting the gaseous feedstock (1) with oxygen (3) in a first reaction zone to obtain a first stream being a sulfur dioxide-containing gaseous stream (7); contacting the first stream (7) with a halogen-containing stream (9, 37) and a water-containing stream (13, 15, 25) in a second reaction zone to obtain a fourth stream being a liquid stream (21) comprising sulfuric acid and one or more hydrogen halides; recovering a hydrogen halides-containing stream (27) and a sulfuric acid-containing stream (25).

## Description

### Technical field

The present disclosure pertains to an installation for the production of sulfuric acid from hydrogen sulfide by partially reusing a Claus unit and to a process for the production of sulfuric acid in said installation, preferably with the recovery of hydrogen.

### Technical background

The Claus process is the industry standard for the transformation of hydrogen sulfide (H₂S) obtained as a by-product, for example in processes using non-renewable energy resources such as coal, natural gas, petroleum and so on. As it is not allowed to release hydrogen sulfide into the environment, H₂S is treated in the Claus process and sulfur is recovered in a multi-step reaction comprising a first thermal step and a second catalytic step.

A Claus unit comprises a burner where the first thermal step takes place and one or more catalytic units for performing the catalytic reaction.

In the first thermal step, a portion of the hydrogen sulfide in the gas feed is oxidized at temperatures above 850°C to produce sulfur dioxide and water:

H₂S + 1.5O₂ → SO₂ + H₂O (1)

In the second catalytic step, the sulfur dioxide produced in the thermal step reacts with hydrogen sulfide to produce sulfur and water:

2SO₂ + 4H₂S → 6S+ H₂O (2)

The catalytic recovery of sulfur takes place in two or three catalytic stages, each catalytic stage comprising the substeps of heating the input process stream, performing the catalytic reaction and cooling and condensation of the gas obtained during the catalytic reaction. Each catalytic stage is performed in a different catalytic unit, each catalytic unit comprising a reheater, a reactor, and a condenser.

The heating process takes place in the reheater and is necessary to prevent sulfur condensation in the catalyst bed, which can lead to catalyst fouling. For this purpose, the reheater is situated before the catalytic reactor. Further, after the reaction is performed in the reactor, the process gas is cooled in the condenser and another catalytic stage may be performed.

After the last catalytic stage, liquid sulfur is recovered from the gas cooler and condenser and is stored for further use. Typically, before storage, the liquid sulfur stream is routed to a degassing unit, where gases (primarily H₂S) dissolved in the sulfur are removed.

In the majority of cases, the obtained sulfur is used to produce sulfuric acid. Traditionally, sulfuric acid is produced from sulfur, oxygen and water via a double conversion double absorption (DCDA) process or a wet sulfuric acid (WSA) process. Those two processes comprise a step wherein sulfur dioxide is oxidized to sulfur trioxide under the presence of a catalyst, usually vanadium (V) oxide. However, the catalyst can be poisoned if the sulfur dioxide is not fairly pure. Moreover, using the Claus process as a source of sulfur has disadvantages, such as complex production processes, long process flow and much equipment needed. Especially the units for performing the catalytic reaction are difficult to operate, with high maintenance costs and complex handling.

Alternatives are desired, that simplify the transformation of hydrogen sulfide in sulfuric acid.

Other processes propose the simultaneous production of sulfuric acid from different sulfur sources, other than sulfur, with the formation of hydrogen halide. The hydrogen halide can be further used to produce hydrogen. For example, WO2004109086A2 discloses a process wherein gases containing sulfide species are contacted in a packed, tray or spray tower with a solution of sulfuric acid, hydrogen bromide and bromine in water. The bromine oxidizes the sulfide species to sulfuric acid and forms hydrogen bromide according to the reaction:

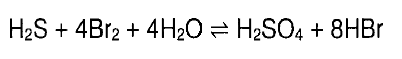

In case the gas is typical refinery gas comprising ammonia, ammonia is removed before treatment with bromine.

Such processes do not require a Claus unit, since sulfur as such is not used as a starting material. However, if a Claus unit is already put in place at a production facility, for example at a refinery, it is not efficient to completely revamp the whole production facility and remove it.

WO2015/006873 discloses a method of producing sulfuric acid from a sour tail gas that comprises the steps of (a) obtaining a sour tail gas stream comprising H₂S or reduced sulfur species or a combination thereof from an oil and gas facility; (b) subjecting the sour tail gas stream to oxidation and obtaining an oxidized gas stream comprising SO₂; and, (c) utilizing the oxidized gas stream to obtain sulfuric acid and an SO₂ reduced tail gas stream. The method may further comprise subjecting the oxidized gas stream to a regenerable absorption process.

There is still a need for a process and an installation for the production of sulfuric acid starting from hydrogen sulfide more efficiently, requiring a simple setting and without the difficulties in the operation like the ones existing during the catalytic stages of a Claus process. At the same time, the installation should not require a complete revamp of the existing production facilities.

### Summary

According to a first aspect, the disclosure relates to a process for the production of sulfuric acid from hydrogen sulfide remarkable in that it comprises the steps of:
a) providing a gaseous feedstock comprising hydrogen sulfide and reacting the gaseous feedstock with oxygen in a first reaction zone under first reaction conditions to obtain a first stream being a sulfur dioxide-containing gaseous stream ;
b) providing a second stream being a halogen-containing stream comprising one or more halogens and a third stream being a water-containing stream;
c) contacting the sulfur dioxide-containing gaseous stream with the halogen-containing stream and the water-containing stream in the second reaction zone and under second reaction conditions sufficient to obtain a fourth stream being a liquid stream comprising sulfuric acid and one or more hydrogen halides; and
d) recovering, from the fourth liquid stream, a fifth stream being a hydrogen halides-containing stream comprising one or more hydrogen halides and a sixth stream being a sulfuric acid-containing stream.

Surprisingly it has been found that it is possible to produce sulfuric acid starting from hydrogen sulfide (preferably in a production site that reuses part of a Claus unit) without first transforming the hydrogen sulfide into sulfur. This removes the catalytic stage of the Claus process which was cumbersome and required high maintenance costs.

The present process is based on the reaction between hydrogen sulfide with oxygen, to obtain sulfur dioxide, and further, the reaction with a halogen and water to obtain sulfuric acid and hydrogen halide according to the following equations:
step a): H₂S + 1.5O₂ → SO₂ + H₂O
step b): SO₂ + 2H₂O + X₂ 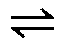 H₂SO₄ + 2HX wherein X is a halogen.

It is understood that the sulfuric acid-containing stream recovered at the end of the process is a liquid stream.

With preference, the first being a sulfur dioxide-containing gaseous stream further comprises steam (or water vapor).

With preference, the first reaction conditions comprise a temperature of at least 850°C; preferably, of at least 1050°C.

With preference, in step (a) oxygen is provided to have an O₂/ H₂S molar ratio of at least 0.5; preferably at least 0.75, more preferably at least 1.0, and even more preferably at least 1.4.

With preference, in the second stream being a halogen-containing stream provided in step (b), the one or more halogens are selected from fluorine, chlorine, bromine, iodine and any mixture thereof; with preference, the one or more halogens are or comprise bromine.

For example, the water-containing stream is selected from water and an aqueous solution of sulfuric acid.

In an embodiment, the water-containing stream comprises sulfuric acid. In such embodiment the water-containing stream is or comprises an aqueous solution of sulfuric acid. With preference, the aqueous solution of sulfuric acid comprises sulfuric acid at a concentration of at least 30 wt.%, based on the total weight of the aqueous solution of sulfuric acid, and preferably of at least 60 wt.%.

In an embodiment, the step b) comprises preparing a liquid solution by mixing the halogen-containing stream comprising one or more halogens with an aqueous solution of sulfuric acid; with preference, the aqueous solution of sulfuric acid comprises sulfuric acid at a concentration of at least 30 wt.% of sulfuric acid based on the total weight of the aqueous solution of sulfuric acid; preferably, at least 60 wt.%.

In another embodiment, step d) further comprises recycling at least a part of the sixth stream being a sulfuric acid-containing stream into step (b) as a water-containing stream, when the sulfuric acid-containing stream has a concentration in sulfuric acid of less than 80 wt.% based on the total weight of the sulfuric acid-containing stream. This embodiment allows further concentration of the sulfuric acid in the aqueous solution recovered at the end of the process. With preference, the process further comprises a step e) of transferring the fifth stream being a hydrogen halides-containing stream to a third reaction zone and subjecting the fifth stream to an electrolysis reaction to obtain a seventh stream being a hydrogen-containing stream and an eighth stream being a halogen-containing stream containing one or more halogens.

With preference, the process further comprises a step f) of recycling at least a part of the eighth stream being a halogen-containing stream containing one or more halogens recovered at step e) into step b) s to become at least a part of the second stream being a halogen-containing stream; with preference to prepare a liquid solution.

In an embodiment, step (d) of recovering, from the fourth stream, a fifth stream being a hydrogen halides-containing stream comprising one or more hydrogen halides comprises heating the fourth stream to a temperature of at least 67°C, preferably at least 75°C.

The fifth stream, being a hydrogen halides-containing stream, can be a gaseous stream or a liquid stream.

When the fifth stream being a hydrogen halides-containing stream is a gaseous stream, the process may comprise a step to obtain a liquid stream from the gaseous stream; with preference, the gaseous stream is condensed to form a liquid stream by means of cooling down or compression.

For example, the first stream being a sulfur dioxide-containing gaseous stream obtained in step (a) further comprises steam.

For example, the gaseous feedstock provided at step a) further comprises one or more selected from NH₃, inert gases, and hydrocarbons.

According to a second aspect, the disclosure provides for an installation for the production of sulfuric acid from a gaseous feedstock comprising hydrogen sulfide according to the process of the first aspect; wherein the installation is remarkable in that it comprises:
- a combustion chamber as a first reaction zone to produce a first stream being a sulfur dioxide-containing gaseous stream;
- an optional mixing vessel to prepare a liquid solution;
- a reactor being a second reaction zone;
- means to convey the first stream obtained in the first reaction zone to the reactor;
- means to convey a stream being a second halogen-containing stream comprising one or more halogens and a third stream being a water-containing stream to the reactor;
- when the installation comprises the optional mixing vessel, means to convey the liquid solution from the mixing vessel to the reactor;
- means to introduce the first stream in the reactor to obtain a fourth stream being a liquid stream comprising sulfuric acid and one or more hydrogen halides; and
- means to recover a fifth stream being a hydrogen halides-containing stream and a sixth stream being a sulfuric acid-containing stream from the fourth stream..

With preference, the combustion chamber is a Claus furnace.

With preference, the means to convey the first gaseous stream obtained in the first reaction zone to the reactor are bubbling means.

In an embodiment, the means to recover a fifth stream being a hydrogen halides-containing stream and a sixth stream being a sulfuric acid-containing stream from the fourth stream comprise heating means

In an embodiment, the means to recover a fifth stream being a hydrogen halides-containing stream and a sixth stream being a sulfuric acid-containing stream from the fourth stream comprise one or more distillation columns and/or one or more flash separation means.

In an embodiment, the installation further comprises means to recycle at least a part of the sixth stream being a sulfuric acid-containing stream back to the reactor or the mixing vessel when present.

Advantageously, the installation further comprises:
- an electrolysis unit being a third reaction zone comprising one or more electrolytic cells; and
- means to convey the fifth stream being a hydrogen halides-containing stream to the electrolysis unit.

The fifth stream being a hydrogen halides-containing stream can be a gaseous stream or a liquid stream.

When the fifth stream being a hydrogen halides-containing stream is a gaseous stream, the installation may comprise means to obtain a liquid stream from the gaseous stream; with preference, the means are cooling means and/or compression means

In an embodiment, the installation comprises means to recover an eighth stream being a halogen-containing stream from the electrolysis unit and to recycle it into the reactor or the mixing vessel when present.

For example, the first reaction zone and/or the means to convey the first stream being a sulfur dioxide-containing gaseous stream are provided with means for heat recovery. With preference, the means for heat recovery are a heat recovery steam generator.

The particular features, structures, characteristics or embodiments may be combined in any suitable manner, as would be apparent to a person skilled in the art from this disclosure, in one or more embodiments.

### Description of the Figures

Figure 1 illustrates an embodiment of a process and installation according to the disclosure.
Figure 2 illustrates electrolytic cell configurations.
Figure 3 illustrates the HBr absorption unit used in example 2 of the disclosure.

### Detailed description

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

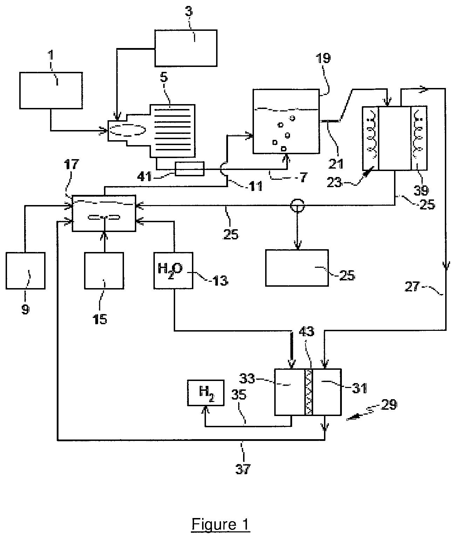

The present disclosure provides a process for the production of concentrated sulfuric acid and an installation to be used to perform such a process. The process and the installation will therefore be described jointly. Reference is made to Figure 1.

The process for the production of sulfuric acid from hydrogen sulfide comprises the steps of:
a) providing a gaseous feedstock 1 comprising hydrogen sulfide and reacting the gaseous feedstock 1 with oxygen 3 in a first reaction zone under first reaction conditions to obtain first stream being a sulfur dioxide-containing gaseous stream 7;
b) providing a second stream being a halogen-containing stream (9, 37) comprising one or more halogens and a third stream being a water-containing stream (13, 15, 25);
c) contacting the sulfur dioxide-containing gaseous stream 7 (i.e., the first stream) with the halogen-containing stream (9, 37) (i.e., the second stream) and the water-containing stream (13, 15, 25) (i.e., the third stream) in a second reaction zone and under second reaction conditions to obtain a fourth stream being a liquid stream 21 comprising sulfuric acid and one or more hydrogen halides;
d) recovering, from the fourth stream 21, a fifth stream being a hydrogen halides-containing stream 27 comprising one or more hydrogen halides and a sixth stream being a sulfuric acid-containing stream 25;
e) optionally, transferring the fifth stream being a hydrogen halides-containing stream 27 to a third reaction zone and subjecting the fifth stream 27 to an electrolysis reaction to obtain a seventh stream being a hydrogen-containing stream 35 and an eighth stream being a halogen-containing stream 37 containing one or more halogens; and
f) optionally, recycling at least a part of the eighth stream being a halogen-containing stream 37 recovered at step e) into containing one or more halogens to step b) to become at least a part of the second stream being a halogen-containing stream (37).

With preference, the first stream being a sulfur dioxide-containing gaseous stream 7 comprising sulfur dioxide obtained in step (a) further comprises steam.

In an embodiment, step (b) comprises mixing the second stream being a halogen-containing stream (9, 37) comprising one or more halogens and the third stream being a water-containing stream (13, 15, 25) to form a liquid solution 11. With preference, in step (c) contacting the first stream being a sulfur dioxide-containing gaseous stream 7 with the halogen-containing stream (9, 37) and the water-containing stream (13, 15, 25) in a second reaction zone is made by bubbling the first stream 7 in the second reaction zone, for example in a liquid solution 11 obtained by mixing the second stream (9, 37) and the third stream (13, 15, 25).

The process can be performed in an installation comprising:
- a combustion chamber 5 as a first reaction zone to produce a first stream being a sulfur dioxide-containing gaseous stream 7; preferably the combustion chamber 5 is a Claus furnace;
- an optional mixing vessel 17 to prepare a liquid solution 11;
- a reactor 19 being a second reaction zone;
- an optional electrolysis unit being a third reaction zone comprising one or more electrolytic cells 29;
- means to convey the first stream 7 obtained in the first reaction zone to the reactor 19;
- means to convey a stream being a second halogen-containing stream (9, 37) comprising one or more halogens and a third stream being a water-containing stream (13, 15, 25) to the reactor 19;
- when the installation comprises the optional mixing vessel 17, means to convey the liquid solution 11 from the mixing vessel 17 to the reactor 19;
- means to introduce the first stream 7 in the reactor 19 to obtain a fourth stream being a liquid stream 21 comprising sulfuric acid and one or more hydrogen halides; and
- means to recover a fifth stream being a hydrogen halides-containing stream 27 and a sixth stream being a sulfuric acid-containing stream 25 from the fourth stream 21;
- optional means to convey the fifth stream 27 to the electrolysis unit 29; and
- optional means to recover an eighth stream being a halogen-containing stream 37 from the electrolysis unit 29 and to recycle it into the reactor 19 or into the mixing vessel 17 when present.

With preference, the means to recover a fifth stream being a hydrogen halides-containing stream 27 and a sixth stream being a sulfuric acid-containing stream 25 from the fourth stream 21 comprise heating means 39 and/or the installation further comprises means to recycle at least a part of the sixth stream being a sulfuric acid-containing stream 25 back to the reactor (19) or to the mixing vessel 17 when present.

### The gaseous feedstock 1, the first reaction zone, and step a) of reacting the gaseous feedstock with oxygen to produce a first gaseous stream comprising sulfur dioxide

The conversion of hydrogen sulfide into sulfur dioxide takes place in the first reaction zone. The first reaction zone can be a combustion chamber 5 (as represented in Figure 1) and/or an incinerator of any design known in the art. In a preferred embodiment, the combustion chamber 5 is a Claus furnace.

The first reaction zone is provided with at least one inlet for allowing the input of the gaseous feedstock 1 and at least one outlet for transferring the obtained first gaseous stream 7 comprising sulfur dioxide, via conveying means, to the second reaction zone.

The oxygen 3 from an oxygen-containg gas and the gaseous feedstock 1 comprising hydrogen sulfide can be provided to the first reaction zone as two separate streams.

Hydrogen sulfide appears as a colorless gas having a strong odour of rotten eggs. Hydrogen sulfide occurs naturally in crude petroleum, natural gas, volcanic gases, and hot springs According to the present disclosure, the non-limiting sources of hydrogen sulfide include exhaust gas produced from natural gas processing, shale gas processing, shale oil associated gas processing, refinery acid gas streams, gas from conventional oil fields, acid gas removal units or acid gas enrichment units. In particular, the source of hydrogen sulfide comes from facilities.

For example, a primary feed stream may comprise COS and/or other reduced sulfur species in addition to H₂S; and the COS and/or other sulfur species may be removed from the primary feed stream to produce the gaseous feedstock wherein said gaseous feedstock mainly comprise H₂S as sulfur species.

For example, a primary feed stream may comprise hydrocarbons.

For example, a primary feed stream may comprise ammonia.

For example, a primary feed stream may comprise CO₂.

For example, a primary feed stream may comprise amines, for instance, monoethanolamine (MEA).

For example, a primary feed stream may comprise inert gases, for instance, nitrogen, helium, and/or argon.

For example, a primary feed stream may comprise water.

For example, a primary feed stream may comprise sulfur vapors. For example, a gaseous feedstock 1 suitable for use in the process of the present disclosure is obtained by the treatment of a hydrocarbon feedstream in an oil and gas facility. For example, the oil and gas refinery comprises a gas/liquid separation unit to produce a methane-containing stream and a gas-reduced liquid stream. The gas-reduced liquid stream can be treated in a refinery that may include various hydrocracking and/or hydro-refining and/or hydro-finishing units, depending on the initial composition of the gas-reduced liquid stream. A liquid stream and a hydrocarbon-containing gaseous stream containing H₂S are produced in the refinery. The gaseous stream containing H₂S can be further treated in a scrubbing unit or an absorbing unit for the production of a product hydrocarbon stream having a reduced concentration of contaminants and an enriched-contaminant gas stream containing H₂S.

According to the disclosure, both the gaseous stream containing H₂S and the enriched-contaminant gas stream containing H₂S can be used as a gaseous feedstock 1 comprising H₂S in step (a) of the present process.

The amount of H₂S in the gaseous feedstock 1 may vary from 1 mol.% to 99.9 mol.% based on the total molar content of the gaseous feedstock 1. Preferably, the amount of H₂S in the gaseous feedstock is at least 1 mol.% based on the total molar content of the gaseous feedstock; preferably at least 5 mol.%; more preferably at least 10 mol.%; even more preferably at least 15 mol.%; most preferably at least 20 mol.%; even most preferably at least 30 mol.% or at least 50 mol.%, or at least 70 mol.%.

The source of oxygen 3 can be any oxygen-containing gas. With preference, the oxygen-containing gas is selected from air, pure oxygen, oxygen-enriched air and any mixture thereof. For example, the oxygen-containing gas comprises at least 20 mol.% based on the total molar content of the oxygen-containing gas; preferably from 20 to 80 mol.%.

In a further embodiment, the gaseous feedstock 1 comprises a further component selected from NH₂, one or more inert gases, one or more hydrocarbons, and any mixture thereof.

Inert gases are gases that do not readily undergo chemical reactions with other chemical substances. Examples of inert gases are, without limitation, nitrogen, argon, and CO₂.

Hydrocarbons are organic compounds consisting entirely of hydrogen and carbon. Many hydrocarbons occur in nature, and they are the principal constituents of petroleum and natural gas. They occur in a diverse range of molecular structures and can be saturated or unsaturated, aliphatic and/or aromatic and combinations thereof. Examples of hydrocarbons, without limitations, are methane, ethane, propane, butane, or higher hydrocarbons. According to the present disclosure, higher hydrocarbons are hydrocarbons having more than five carbon atoms.

In the case wherein the gaseous feedstock 1 comprises one or more hydrocarbons, the required water input would be reduced since water will be produced from one or more hydrocarbons.

The reaction taking place in the first reaction zone 1 is according to the following equation:

H₂S + 1.5 O₂ → SO₂ + H₂O

The reaction takes place in a combustion chamber 5 as the first reaction zone; preferably the combustion chamber 5 is a Claus furnace.

The reaction is a strongly exothermic free-flame total oxidation of hydrogen sulfide generating sulfur dioxide. The first reaction conditions, therefore, include a temperature of at least 850°C; preferably at least 950°C; more preferably at least 1050°C. For example, the first reaction conditions include a temperature ranging from 850 to 1400°C.

With preference, oxygen is provided to have an O₂/ H₂S molar ratio of at least 0.5; preferably at least 0.75, more preferably at least 1.0, and even more preferably at least 1.4. In an embodiment, the O₂/ H₂S molar ratio is about 1.5.

A first gaseous stream 7 comprising sulfur dioxide (i.e., a first stream being a sulfur dioxide-containing gaseous stream 7) is produced which has a temperature in the range of 400 to 1100°C. The heat can be recovered and may be used, for example, to generate steam in means for heat recovery 41, such as a heat recovery steam generator.

In an embodiment, the heat generated in step a) is recovered and used to produce steam. For this purpose, the combustion chamber 5 and/or the means to convey the first stream 7 (i.e., the sulfur dioxide-containing gaseous stream 7) obtained in the first reaction zone are further provided with means for heat recovery 41. Preferably, the means for heat recovery 41 is a heat recovery steam generator. When the combustion chamber 5 is a Claus furnace, means for heat recovery 41 already implemented in a Claus unit may be used in the context of the present disclosure with no additional reconfiguration or costs.

### The step b) of providing a second stream being a halogen-containing stream comprising one or more halogens and a third stream being a water-containing stream

In an embodiment, the second stream being a halogen-containing stream (9, 37) comprising one or more halogens and the third stream being a water-containing stream (13, 15, 25) are mixed to form a liquid solution 11. For example, the liquid solution 11 is obtained by mixing a halogen-containing stream (9, 37) comprising one or more halogens with a water-containing stream selected from water 13 and/or an aqueous solution of sulfuric acid (15; 25).

It is understood that when the liquid solution 11 is obtained by mixing a halogen-containing stream (9, 37) comprising one or more halogens 9 with water 13, the initial concentration in sulfuric acid is 0 wt.% based on the total weight of the liquid solution 11.

In the embodiment, wherein the liquid solution 11 is obtained by mixing a halogen-containing stream (9, 37) comprising one or more halogens 9 with an aqueous solution of sulfuric acid (15, 25); sulfuric acid is present in the aqueous solution of sulfuric acid. For example, the content of sulfuric acid in the aqueous solution of sulfuric acid is at most 80 wt.% based on the total weight of the aqueous solution of sulfuric acid; preferably, at most 78 wt.%; more preferably, at most 75 wt.%; even more preferably, at most 72 wt.%; and most preferably, at most 70 wt.%.

For example, the liquid solution 11 comprises less than 80 wt.% of sulfuric acid based on the total weight of the liquid solution 11; preferably, less than 78 wt.%; more preferably, less than 75 wt.%; even more preferably, less than 72 wt.%; and most preferably, less than 70 wt.%.

For example, the one or more halogens, in the halogen-containing stream (9, 37) comprising one or more halogens, are selected from fluorine, chlorine, bromine, iodine and any mixture thereof; with preference, the one or more halogens are or comprise bromine.

Bromine is a compound used in different domains of the industry. It can be obtained from the bromide contained in the seawater using modified Balard's process. Alternatively, electrolysis of HBr can provide bromine.

### The step (c) of contacting the first stream being a sulfur dioxide-containing gaseous stream comprising sulfur dioxide with the second stream being a halogen-containing stream and the third stream being a water-containing stream in a second reaction zone

For example, the step (c) is of contacting the first stream 7 comprising sulfur dioxide with the halogen-containing stream (9, 37) and the water-containing stream (13, 15, 25) in a second reaction zone is a step of contacting the first stream 7 comprising sulfur dioxide with the liquid solution 11 in a second reaction zone.

The first stream 7 comprising sulfur dioxide obtained in the first reaction zone is conveyed to the second reaction zone. In the second reaction zone, the halogen-containing stream (9, 37) and the water-containing stream (13, 15, 25) (or the first liquid solution 11) are also provided. The reaction taking place in the second reaction zone is according to the following equation 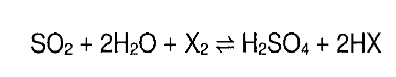 wherein X is a halogen.

For example, the second reaction conditions comprise pressure ranging from 2 to 20 barG (i.e., from 0.2 MPa to 2 MPa) and/or a temperature ranging from 80 to 325°C.

For example, the second reaction conditions comprise the presence of SO₂ in an excess of 5 to 10% of the stoichiometric amount. In that case, unreacted SO₂ could be further captured by a scrubber.

For example, the second reaction conditions comprise the presence of halogen and water in excess of 5 to 1000% of the stoichiometric amount.

The second reaction zone may be of any design known in the art, as long as it is suitable for the reaction in step c). For example, as a Claus unit is normally provided with one or more units to perform the catalytic transformation of SO₂ into sulfur, a reconfiguration of the Claus unit to contain a second reaction zone and means to convey the SO₂ obtained in step a) to the second reaction zone needs to be made. Such reconfiguration may be made by adding another reactor or by adapting one of the existing catalytic reactors as the second reaction zone.

### The step d) of recovering from the fourth stream, a fifth stream being a hydrogen halides-containing stream comprising one or more hydrogen halides and a sixth stream being a sulfuric acid-containing stream

The process comprises the step (d) of recovering, from the fourth stream 21, a fifth stream being a hydrogen halides-containing stream 27 comprising one or more hydrogen halides and a sixth stream being a sulfuric acid-containing stream 25.

The process of the present disclosure allows the production of sulfuric acid and therefore can enrich the liquid solution 11 in sulfuric acid. The process allows the recovery of a sixth stream comprising a final concentration of sulfuric acid greater than the initial concentration of sulfuric acid in the water-containing stream or in the liquid solution 11. Therefore, the sixth liquid stream comprises a final concentration of sulfuric acid greater than the initial concentration of sulfuric acid in the liquid solution 11 or in the water-containing stream.

With preference, the sixth stream 25 comprises at least 70 wt.% of sulfuric acid based on the total weight of the sixth liquid stream; preferably at least 75 wt.%; more preferably at least 80 wt.%. In an embodiment the sixth liquid stream 25 comprises at most 98.5 wt.% of sulfuric acid based on the total weight of the sixth liquid stream; preferably at most 95 wt.%; more preferably at most 90 wt.% and even more preferably at most 85 wt.%, most preferably at most 75 wt.%.

In case the targeted final concentration in acid sulfuric is not achieved, the person skilled in the art may recycle at least a part of the sixth stream 25 to the mixing vessel 17 and perform a new enrichment of the solution in sulfuric acid. For example, step d) comprises recovering a sixth stream being a sulfuric acid-containing stream 25 and, and when the sixth stream 25 has a concentration in sulfuric acid of less than 80 wt.% based on the total weight of the sixth liquid stream, recycling at least a part of said sixth stream 25 into the mixing vessel 17 or into the second reaction zone.

In an embodiment, step (d) comprises separating the one or more hydrogen halides from the fourth liquid stream 21 to obtain a fifth being a hydrogen halides-containing stream 27 comprising the one or more hydrogen halides and transferring the fifth stream 27 to a third reaction zone.

The fifth stream 27 can be a gaseous stream or a liquid stream, preferably a gaseous stream. When the fifth stream 27 is a gaseous stream, the process may comprise a step to obtain a liquid stream from the gaseous stream; with preference, the gaseous stream is condensed to form a liquid stream by means of cooling down or compression.

### The optional third reaction zone and the optional step (e) of subjecting the fifth stream to an electrolysis

In a preferred embodiment the step (d) comprises separating the one or more hydrogen halides from the fourth liquid stream 21 to obtain a fifth stream 27 comprising the one or more hydrogen halides and transferring the fifth stream 27 to a third reaction zone, and the process further comprises a step (e) of subjecting the fifth stream 27 to an electrolysis reaction to obtain a hydrogen-containing stream 35 and a halogen-containing stream 37 containing one or more halogens.

For this purpose, the second reaction zone is further provided with means for separating the hydrogen halides. For example, the fourth liquid stream 21 is discharged from the reactor 19 and transferred to a boiler 23 wherein the fourth liquid stream 21 is heated to a temperature of at least 67°C, preferably at least 70°C; more preferably at least 75°C. The hydrogen halides are then separated as a fifth gaseous stream 27.

Optionally, the step e) comprises a sub-step of water addition before performing the electrolysis reaction to obtain a hydrogen-containing stream 35 and a bromine-containing stream 37.

As another example of a separation method, a distillation process can be used to separate a fifth stream comprising the one or more hydrogen halides. The hydrogen halides are then separated as a vapour stream or liquid stream (for example in case of the presence of a condenser after the distillation columns). The remaining liquid solution is the sixth liquid stream comprising sulfuric acid. In such a case the installation comprises one or more distillation columns and an optional condenser.

The installation is further provided with means for conveying the fifth stream 27 to a third reaction zone comprising an electrolysis unit comprising one or more electrolytic cells 29. The means for conveying the hydrogen halides-containing stream 27 can be of any design known in the art.

The fifth stream being a hydrogen halides-containing stream can be a gaseous stream or a liquid stream; preferably the fifth stream is recovered as a gaseous stream. When the fifth stream is a gaseous stream, the process may comprise a step to obtain a liquid stream from the gaseous stream; with preference, the gaseous stream is condensed to form a liquid stream by means of cooling down or compression. As a consequence, the installation may comprise means to obtain a liquid stream from the gaseous stream; with preference, the means are cooling means (such as a condenser) and/or compression means. Indeed, it may be advantageous to perform the electrolysis on a liquid stream.

In a preferred embodiment, the third reaction zone comprises one or more electrolytic cells 29, each comprising an anode 31, a cathode 33, an anode chamber, a cathode chamber and a solid polymer electrolyte membrane 43 separating the anode chamber from the cathode chamber.

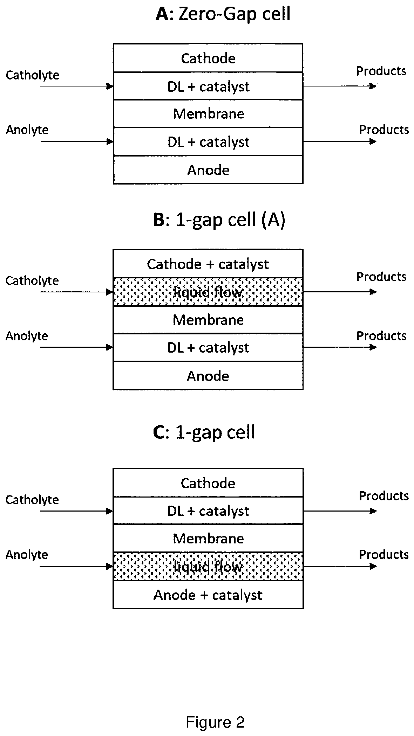

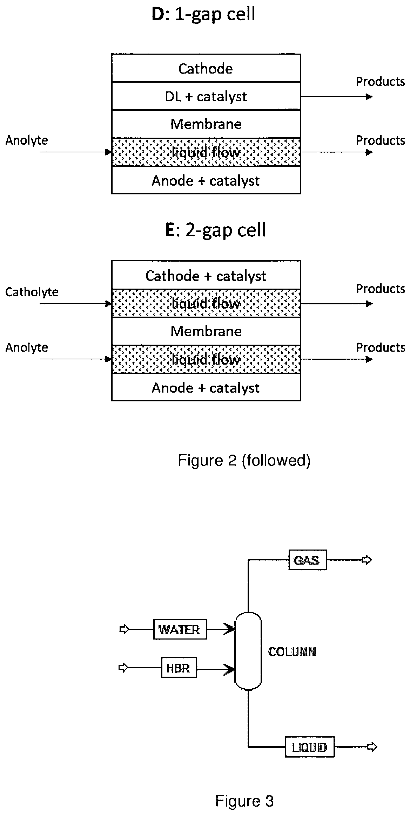

For example, the one or more electrolytic cells 29 are selected from zero-gap electrolytic cells, two-gap electrolytic cells, or one-gap electrolytic, which could be catholyte-free one-gap electrolytic cells. Preferably the one or more electrolytic cells are zero-gap electrolytic cells, such as membrane electrode assembly (MEA). The different configurations are illustrated in figure 2.

In the cases the electrolytic cell is a zero-gap electrolytic cell (figure 2A) or a one-gap electrolytic cell (figure 2C and 2D), then the cathode catalyst layer is in contact with the ion-exchange membrane.

In the cases the electrolytic cell is a zero-gap electrolytic cell (figure 2A) or a one-gap electrolytic cell (figure 2A) then the anode catalyst layer is in contact with the ion-exchange membrane.

In the case wherein the electrolytic cell is a two-gap electrolytic cell (figure 2E) none of the cathode catalyst layer and anode catalyst layer is in contact with the ion-exchange membrane. This is due to the presence of both a catholyte and an anolyte.

In a preferred embodiment, the one or more electrolytic cells 29 are one or more zero-gap electrolytic cells, with catholyte and anolyte.

In figure 2, DL is for diffusion layer, which is a porous media which enables uniform distribution of reactive liquids or gases on the surface of the electrodes and transports of electrons. For example, the zero-gap cell and the one-gap cell comprise at least one diffusion layer as illustrated on Figure 2.

The anode catalyst and the cathode catalyst may be any suitable catalyst known from the art. The anode catalyst and the cathode catalyst can be the same or different.

In an embodiment, the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof For example, the anode catalyst comprises platinum; with preference, the anode catalyst comprises at least 0.5 wt.% of platinum based on the total weight of the anode catalyst. However, it was reported that at high bromine concentrations platinum losses could occur due to dissolution and poisoning (Kyu Taek Cho, Michael C. Tucker, Adam Z. Weber, Energy Technology, Volume 4, Issue 6, 2016, Pages 655-678)

Alternatively, DSA^{®} brand anode catalysts produced by the De Nora company could be applied. This type of anode uses mixed metal oxide (MMO) coating which allows a long and stable operation.

Also, Lead Dioxide Titanium Electrode (Ti/PbO₂) anode could be used. The lead dioxide coating on titanium substrate has strong corrosion resistance and is suitable for the media.

Mentioned anodes could be further modified by doping Ce or Bi metals to the anode catalyst using the techniques known in the art (Pengfei Xu, Xiaohong He, Junwei Mao and Yongming Tang, Journal of The Electrochemical Society, Volume 166, Number 13, 2019, 638).

For example, the cathode catalyst comprises platinum; with preference the cathode catalyst comprises 0.5 wt.% of platinum based on the total weight of the cathode catalyst. The process may comprise optional steps of preparing the anode catalyst and/or the cathode catalyst.

For example, the ion-exchange membrane is a cation-exchange membrane (CEM), preferably a proton exchange membrane (PEM) comprising one or more layers, wherein the layer or at least one of the layers comprises an ionomer comprising a fluoropolymer having pendant sulfonic acid groups.

For example, the ion exchange membrane is a cation-exchange membrane (CEM) or a membrane (PEM). Both types of membranes are well-known by the person skilled in the art.

Typical cation exchange membranes include proton conducting membranes, such as the perfluorosulfonic acid polymer available under the trade designation Nafion from E. I. du Pont de Nemours and Company (DuPont) of Wilmington, Del. A proton-exchange membrane, or polymer-electrolyte membrane (PEM), is a semipermeable membrane generally made from ionomers and designed to conduct protons while acting as an electronic insulator and reactant barrier, e.g., to oxygen and hydrogen gas.

Thus, the cation-exchange membrane can further comprise an ionomer, more particularly an ionomer comprising fluoropolymer having one or more sulfonic acid groups or one or more pendant sulfonic acid groups. For example, the cation-exchange membrane can comprise one or more layers, wherein the layer or at least one of the layers comprises an ionomer, more particularly an ionomer comprising fluoropolymer having one or more sulfonic acid groups or one or more pendant sulfonic acid groups.

For example, the ionomer comprises a perfluorinated sulfonic acid ionomer. For example, said perfluorinated sulfonic acid ionomer comprises sulfonated tetrafluoroethylene based fluoropolymer-copolymer (such as Nafion^{®} or 1,1,2,2-Tetrafluoroethene;1,1,2,2-tetrafluoro-2-[1,1,1,2,3,3-hexafluoro-3-(1,2,2-trifluoroethenoxy)propan-2-yl]oxyethanesulfonic acid), SSC, Aciplex, Flemion, 3M-perfluorinated sulfonic acid ionomer, Aquivion, an ionene, or a combination thereof.

Thus, in an embodiment, the ion-exchange membrane is a proton exchange membrane comprising one or more layers, wherein the layer or at least one of the layers comprises an ionomer comprising a fluoropolymer having one or more pendant sulfonic acid groups.

The fifth stream 27 is provided at the anode 31 as a first input flow, preferably the fifth stream 27 is a hydrogen bromide aqueous solution. For example, hydrogen bromide (HBr) is present in the hydrogen bromide aqueous solution at a content of at least 15 wt.% of HBr based on the total weight of the hydrogen bromide aqueous solution; preferably at least 25 wt.%; more preferably at least 30 wt.%; even more preferably at least 45 wt.%.

In a preferred embodiment hydrogen bromide (HBr) is present in the hydrogen bromide aqueous solution at a content of at most 48.3 wt.% at 20 °C; and forms a constant-boiling azeotrope mixture.

For example, hydrogen bromide (HBr) is present in the hydrogen bromide aqueous solution at a content ranging from 10 to 48.3 wt.% of HBr based on the total weight of the hydrogen bromide aqueous solution; preferably ranging from 15 to 47.6 wt.%; more preferably ranging from 17 to 45 wt.%; even more preferably ranging from 19 to 42 wt.% or from 20 to 40 wt.% or from 21 wt.% to 39 wt.% or from 22 wt.% to 48.3 wt.%.

In a preferred embodiment, the fifth gaseous stream 27 (preferably, the hydrogen bromide aqueous solution) is metal-free.

A second input flow is provided at the cathode 33 and is or comprises water 13 or an aqueous solution Preferably, said input flow is an aqueous solution of one or more mineral acids, serving as a source of protons. With preference, said aqueous solution of one or more mineral acids has a pH ranging from 0.1 to 5.0, preferably from 0.3 to 3.5, more preferably from 0.5 to 2.0.

For example, the aqueous solution of one or more mineral acids comprises one or more selected from hydrochloric acid (HCl), nitric acid (HNOs), phosphoric acid (H₃PO₄), sulfuric acid (H₂SO₄), boric acid (H₃BO₃), hydrofluoric acid (HF), hydrobromic acid (HBr), perchloric acid (HClO₄), hydroiodic acid (HI), or a mixture thereof. With preference, the aqueous solution of one or more mineral acids comprises hydrobromic acid, sulfuric acid, nitric acid, or mixture thereof, more preferably, the aqueous solution of one or more mineral acids comprises hydrobromic acid.

In an embodiment, the second input flow is a lean hydrogen bromide aqueous solution at a content of less than 35 wt.% based on the total weight of the second input flow. More preferably the lean hydrogen bromide aqueous solution has a content of less than 25 wt.% based on the total weight of the second input flow.

For example, the first and/or the second input flow have liquid minute space velocity ranging from 0.1 to 20; preferably ranging from 0.2 to 2, wherein the liquid minute space velocity (LMSV) is V1/V2, where V1 [L/min] - flow, V2 - volume of half-cell (between to electrode and membrane) wherein the LMSV is normalised.

Operating the one or more electrolytic cells comprises passing a current between the anode 31 and the cathode 33.

For example, the third reaction conditions (i.e., the electrolysis conditions) comprise an anode current density of at least 0.5 kA/m²; preferably, at least 0.6 kA/m² or 4.5 kA/m²; more preferably, at least 1 kA/m² or 1.5 kA/m²; even more preferably at least 2.0 kA/m² and most preferably at least 2.2 kA/m² or at least 2.5 kA/m².

For example, the electrolysis conditions comprise an anode current density ranging from 0.5 to 10.0 kA/m²; preferably, from 0.6 to 9.0 kA/m²; more preferably, from 1 to 8.5 kA/m²; even more preferably from 1.5 to 8.0 kA/m² and most preferably from 2 to 7.8 kA/m² or from 2.2 to 7.5 kA/m².

For example, the electrolysis conditions comprise a voltage of at least 0.9 V or at least 1.0 V; preferably at least 1.1V or at least 1.2 V.

For example, the electrolysis conditions comprise a voltage ranging from 0.9 V to 10.0 V or from 1.0 V to 10.0 V; preferably from 1.1V to 9.5 V, more preferably from 1.2 V to 9.0 V.

The electrolysis conditions comprising high voltage and high current density ensure maximum HBr conversion (>50%) per pass and the formation of a two-phase system as an effluent.

For example, the third reaction conditions comprise a temperature of the solution during electrolysis that is ranging from 20 to 100°C; preferably from 40 to 95°C; more preferably from 50 to 90°C; and even more preferably from 60 to 85°C.

The process further comprises recovering an eighth stream being a halogen-containing stream 37 comprising one or more halogens at the anode 31 and a seventh stream being a hydrogen-containing stream 35 at the cathode 33.

The halogen-containing stream 37 comprising one or more halogens (for example, comprising bromine) from the anode side can be recovered. In an embodiment, the process comprises cooling the eighth stream at a temperature ranging from 10 to 40°C before performing' a separation. Cooling can be done using one or more heat exchangers. The separation may be performed by distillation or decantation.

For example, the third reaction zone further comprises at least one decanter and means to convey the eighth stream being a halogen-containing stream 37 containing one or more halogens.effluent exiting the anodic chamber of the one or more electrolytic cells to the decanter.

In a further embodiment, the eighth stream 37 is at least partially recycled back to the mixing vessel 17 or to the second reaction zone. For this purpose, the installation comprises means to recover a halogen-containing stream 37 from the electrolysis unit and recycle it to the mixing vessel 17 or to the reactor 19.

### Examples

### Example 1

A 100 g sample of dilute sulfuric acid (cca. 70wt.%) was mixed in a flask under vigorous stirring with 35 g of Br₂. The solution was kept at 20°C to ensure no bromine evaporation. The SO₂ gas was bubbled through the liquid for 4h at a constant rate of 50 mL/min. After 4h the solution turned pale-orange, indicating almost complete consumption of bromine. The liquid product was warmed up to 75°C and flushed with nitrogen to remove traces of unreacted bromine. After, the liquid was cooled down. The collected product has a mass of 111.4 g and a volume of 63.7 mL, which corresponds to a density of about 82 wt.% sulfuric acid.

### Example 2 - HBr absorption in water

For absorption of HBr a model system comprising an absorption column with 20 stages was studied.

The treated gas flow comprised dry HBr (0.4 kg/hr) and N₂ (0.2 kg/hr) and was fed on the bottom stage of the column (see figure 3). Liquid absorbent comprised pure water (1 kg/hr) and was fed on the top stage to have counter-current flow. The system operated at 2 barG (*i.e*., 0.2 MPa). Exothermic absorption occurred leading to complete removal of HBr from the inlet stream. The outlets of the column comprise two streams:
(1) gaseous effluent on the top of the column comprising N₂ and water vapor carried out due to heating of the column;
(2) aqueous liquid stream comprising predominantly dissociated HBr solution (HBr + H₂O 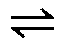 H₃O⁺ + Br⁻).

Results are provided in the below table

| Stream Name | Units | GAS | HBr | LIQUID | WATER |
|---|---|---|---|---|---|
| Temperature | °C | 94 | 25 | 130 | 25 |
| Pressure | MPa | 0.2 | 0.2 | 0.2 | 0.2 |
| H₂O | kg/hr | 0.05 | 0.00 | 0.86 | 1.00 |
| HBr | kg/hr | 0.00 | 0.40 | 0.00 | 0.00 |
| H₃O⁺ | kg/hr | 0.00 | 0.00 | 0.09 | 0.00 |
| Br | kg/hr | 0.00 | 0.00 | 0.39 | 0.00 |
| N₂ | kg/hr | 0.20 | 0.20 | 0.00 | 0.00 |

## Claims

1. - A process for the production of sulfuric acid from hydrogen sulfide **characterized in that** it comprises the steps of:
a) providing a gaseous feedstock (1) comprising hydrogen sulfide and reacting the gaseous feedstock (1) with oxygen (3) in a first reaction zone under first reaction conditions to obtain a first stream being a sulfur dioxide-containing gaseous stream (7);
b) providing a second stream being a halogen-containing stream (9, 37) comprising one or more halogens and a third stream being a water-containing stream (13, 15, 25);
c) contacting the sulfur dioxide-containing gaseous stream (7) c with the halogen-containing stream (9, 37) and the water-containing stream (13, 15, 25) in a second reaction zone and under second reaction conditions sufficient to obtain a fourth stream being a liquid stream (21) comprising sulfuric acid and one or more hydrogen halides; and
d) recovering, from the fourth stream (21), a fifth stream being a hydrogen halides-containing stream (27) comprising one or more hydrogen halides and a sixth stream being a sulfuric acid-containing stream (25).

2. - The process according to claim 1 is **characterized in that** the first reaction conditions comprise a temperature of at least 850°C; preferably, of at least 1050°C.

3. - The process according to any of claims 1 or 2 is **characterized in that**, in the second stream being a halogen-containing stream provided in step (b), the one or more halogens are selected from fluorine, chlorine, bromine, iodine and any mixture thereof; with preference, the one or more halogens are or comprise bromine.

4. - The process according to any of claims 1 to 3 is **characterized in that** the water-containing stream (15; 25) comprises sulfuric acid; with preference, the step b) comprises preparing a liquid solution (11) by mixing the halogen-containing stream (9, 37) comprising one or more halogens with a water-containing stream being an aqueous solution of sulfuric acid (15, 25) wherein the aqueous solution of sulfuric acid comprises sulfuric acid at a concentration of at least 30 wt.% of sulfuric acid based on the total weight of the aqueous solution of sulfuric acid.

5. - The process according to any of claims 1 to 4 is **characterized in that** step d) further comprises recycling at least a part of the stream being a sulfuric acid-containing stream (25) into step (b) as a water-containing stream (25), when the sulfuric acid-containing stream (25) has a concentration in sulfuric acid of less than 80 wt.% based on the total weight of the sulfuric acid-containing stream.

6. - The process according to any one of claims 1 to 5 is **characterized in that** it further comprises a step e) of transferring the fifth stream being a hydrogen halides-containing stream (27) to a third reaction zone and subjecting the fifth stream (27) to an electrolysis reaction to obtain a seventh stream being a hydrogen-containing stream (35) and an eighth stream being a halogen-containing stream (37) containing one or more halogens.

7. - The process according to claim 6 is **characterized in that** it comprises step f) of recycling at least a part of the halogen-containing stream (37) containing one or more halogens recovered at step e) into step b) to become at least a part of the second stream being a halogen-containing stream (9, 37).

8. - The process according to any one of claims 1 to 7 is **characterized in that** step (d) of recovering, from the fourth stream (21), a fifth stream being a hydrogen halides-containing stream(27) comprising the one or more hydrogen halides, comprises heating the fourth stream (21) to a temperature of at least 67°C: preferably at least 75°C.

9. - The process according to any one of the claims 1 to 8, is **characterized in that** the first stream being a sulfur dioxide-containing gaseous stream (7) obtained in step (a) further comprises steam and/or **in that** the gaseous feedstock (1) provided at step a) further comprises one or more selected from NH₃, inert gases, and hydrocarbons.

10. - An installation for the production of sulfuric acid from a gaseous feedstock (1) comprising hydrogen sulfide according to the process of any one of claims 1 to 9; wherein the installation is **characterized in that** it comprises:
- a combustion chamber (5) as a first reaction zone to produce a first stream being a sulfur dioxide-containing gaseous stream (7);
- an optional mixing vessel (17) to prepare a liquid solution (11);
- a reactor (19) being a second reaction zone;
- means to convey the first stream (7) obtained in the first reaction zone (5) to the reactor (19),
- means to convey a stream being a second halogen-containing stream (9, 37) comprising one or more halogens and a third stream being water-containing stream (13, 15, 25) to the reactor (19);
- when the installation comprises the optional mixing vessel (17), means to convey the liquid solution (11) from the mixing vessel (17) to the reactor (19);
- means to introduce the first stream (7) in the reactor (19) to obtain a fourth stream being a liquid stream (21) comprising sulfuric acid and one or more hydrogen halides; and
- means to recover a fifth stream being a hydrogen halides-containing stream (27) and a sixth stream being a sulfuric acid-containing stream (25) from the fourth stream (21).

11. - The installation according to claim 10 is **characterized in that** the means to recover a fifth stream being a hydrogen halides-containing stream (27) and a sixth stream being a sulfuric acid-containing stream (25) from the fourth stream (21) comprise heating means (39) and/or **in that** the installation further comprises means to recycle at least a part of the sixth stream being a sulfuric acid-containing stream (25) back to the reactor (19) or to the mixing vessel (17) when present.

12. - The installation according to claim 10 or 11 is **characterized in that** it further comprises:
- an electrolysis unit being a third reaction zone comprising one or more electrolytic cells (29); and
- means to convey the fifth stream (27) to the electrolysis unit.

13. - The installation according to claim 12 is **characterized in that** it further comprises means to recover an eighth stream being a halogen-containing stream (37) from the electrolysis unit (29) and to recycle it into the reactor (19) or into the mixing vessel (17) when present.

14. - The installation according to any one of claims 10 to 13 is **characterized in that** the first reaction zone and/or the means to convey the first stream being a sulfur dioxide-containing gaseous stream (7) are provided with means for heat recovery (41); with preference, the means for heat recovery (41) are a heat recovery steam generator.

15. - The installation according to any one of claims 10 to 14 is **characterized in that** the combustion chamber (5) is a Claus furnace.
